# FASCICULE DE BREVET EUROPEEN

(11) **EP 3 127 244 B1**
(45) Date de publication et mention de la délivrance du brevet: **06.06.2018**
(21) Numéro de dépôt: 15715345.3
(22) Date de dépôt: 18.03.2015
(51) Int. Cl.: H04B 1/08, H04M 1/60, H04N 21/414, G06F 3/16, B60R 11/02

(54) **DISPOSITIF DE CONTROLE DE LA DIFFUSION DE SIGNAUX AUDIO DE SOURCES PRIMAIRES ET AUXILIAIRES D'UN SYSTEME, EN FONCTION DE LEUR DURÉE**
STEUERGUNGSVORRICHTUNG EINES SYSTEMS ZUR VERBREITUNG VON AUDIOSIGNALEN VON PRIMÄREN- UND HILFS-QUELLEN ALS FUNKTION IHRER DAUER
CONTROL DEVICE OF A SYSTEM FOR DISTRIBUTION OF AUDIO SIGNALS OF PRIMARY AND AUXILLARY SOURCES AS A FUNCTION OF THEIR DURATION

(30) Priorité: 03.04.2014 FR 1452937
(43) Date de publication de la demande: 08.02.2017
(73) Titulaire: PSA Automobiles SA, 78300 Poissy (FR)
(72) Inventeur: FALCONNET, Gautier, F-75013 Paris 13 (FR)
(86) Numéro de dépôt international: PCT/FR2015/050662
(87) Numéro de publication internationale: WO 2015/150655

(56) Documents cités:
- JP-A- 2005 265 460
- US-A- 6 052 471
- US-A1- 2005 054 386

## Description

L'invention concerne la diffusion de signaux audio générés par des sources audio primaire(s) et auxiliaire(s) équipant certains systèmes, et plus précisément le contrôle de la diffusion de tels signaux audio.

On entend ici par « source audio primaire » une source intégrée fixement et de façon permanente dans un système et propre à générer des signaux audio, analogiques ou numériques, et présentant un premier type connu et/ou un second type connu qui assure une priorité de diffusion. A titre d'exemples non limitatifs, une source audio primaire pourra être une radio, un lecteur de disques compacts et/ou vidéo intégré, un lecteur de cassettes audio intégré, un périphérique hébergeant des médias et couplé à un connecteur USB intégré, un dispositif d'aide à la navigation intégré, un dispositif d'aide au stationnement intégré, un dispositif de communication sans fil intégré, une radio « web », des sons générés par des fonctions d'un système, des alertes d'un système, ou des fichiers média internes à un système.

Par ailleurs, on entend ici par « signaux audio d'un premier type » des signaux audio média ou musicaux dont la durée est relativement longue et qui sont diffusés de façon sensiblement continue, et par « signaux audio d'un second type » des signaux audio qui sont diffusés de temps en temps et dont la durée est généralement relativement courte (comme par exemple une annonce de trafic, un message de guidage routier, la lecture d'un SMS, un appel téléphonique, ou un signal sonore d'aide au stationnement).

De plus, on entend ici par « source audio auxiliaire » une source audio externe qui provient d'un appareil additionnel et donc qui peut être présente de façon temporaire dans un système, dont la connexion est filaire ou non, et qui est propre à générer des signaux audio, analogiques ou numériques, dont le type n'est pas connu du système ou peut varier dans le temps. A titre d'exemples non limitatifs, une source audio auxiliaire pourra être un lecteur de disques compacts et/ou vidéo transportable, un dispositif d'aide à la navigation transportable, un équipement de communication mobile (téléphone (éventuellement intelligent), objet connecté ou tablette électronique), ou un lecteur de média transportable.

Certains systèmes, comme par exemple certains véhicules (éventuellement automobiles), comprennent un équipement de gestion qui est chargé de gérer les différentes sources audio primaire(s) et auxiliaire(s) qui sont couplées à elle, de façon permanente ou temporaire. Plus précisément, lorsqu'un usager sélectionne une première source audio primaire générant des signaux audio du premier type, l'équipement de gestion n'autorise la diffusion dans son système que des signaux audio de cette première source audio primaire sélectionnée. Bien entendu, si une seconde source audio primaire génère des signaux audio du second type pendant la diffusion précitée, l'équipement de gestion interrompt ou mixe la diffusion des signaux audio de la première source audio primaire sélectionnée et autorise temporairement la diffusion des signaux audio de cette seconde source audio primaire.

Mais, lorsque l'usager décide de coupler une source audio auxiliaire à l'équipement de gestion, ce dernier ne connaît pas le type des signaux audio qu'elle doit diffuser. Si l'équipement de gestion traite ces derniers signaux audio comme s'ils présentaient le premier type alors qu'ils sont en réalité du second type, ils ne seront diffusés qu'à condition que l'usager ait sélectionné cette source audio auxiliaire en tant que source permanente. On comprendra que dans ce cas, seuls seront diffusés de temps en temps dans le système des signaux audio de courte durée générés par la source audio auxiliaire sélectionnée, et donc la plupart du temps rien d'autre ne sera diffusé, alors même que les signaux audio de la première source audio primaire pourraient être diffusés. Cette situation peut s'avérer dérangeante pour les personnes présentes dans le système.

Maintenant, si l'équipement de gestion traite les signaux audio de la source audio auxiliaire comme s'ils présentaient le second type alors qu'ils sont en réalité du premier type, ils sont diffusés de façon prioritaire tant qu'ils ne s'arrêtent pas et donc tant qu'un « blanc de diffusion » ne survient pas. Par conséquent, si les signaux audio définissent des plages musicales, dès qu'une plage musicale se termine, l'équipement de gestion ré-autorise la diffusion des signaux audio de la première source audio primaire, et dès que la plage musicale suivante commence à être générée par la source audio auxiliaire l'équipement de gestion autorise sa diffusion puisqu'il la considère comme prioritaire. On comprendra que cette situation est particulièrement désagréable pour les personnes présentes dans le système.

Il est connu du document US2005/0054386A un dispositif conforme au préambule de la revendication 1 avec les inconvénients précités.

L'invention a donc notamment pour but d'améliorer la situation.

Elle propose notamment à cet effet un dispositif dont l'objet correspond à la partie caractérisante de la revendication 1.

On évite ainsi de passer d'une source audio à une autre alors que cela ne s'avère pas utile.

Le dispositif de contrôle selon l'invention peut comporter d'autres caractéristiques qui peuvent être prises séparément ou en combinaison, et notamment :
- dans un premier mode de réalisation, ses moyens de contrôle peuvent être agencés pour autoriser soit la poursuite de la diffusion des signaux audio de la source audio auxiliaire lorsque la durée de diffusion est supérieure au seuil, soit la reprise de la diffusion de signaux audio de la source audio primaire sélectionnée lorsque la durée de diffusion est inférieure au seuil ;
- dans un second mode de réalisation, ses moyens de contrôle peuvent être agencés, i) lorsque la durée de diffusion est inférieure au seuil, pour autoriser soit la poursuite de la diffusion des signaux audio de la source audio auxiliaire lorsque de nouveaux signaux audio ont été générés par cette source audio auxiliaire entre la fin de la diffusion des précédents signaux audio et l'expiration d'une première temporisation débutée juste après cette fin, soit la reprise de la diffusion de signaux audio de la source audio primaire sélectionnée lorsqu'aucun nouveau signal audio n'a été généré par la source audio auxiliaire entre la fin de la diffusion des précédents signaux audio et l'expiration de cette première temporisation débutée juste après cette fin, et ii) lorsque la durée de diffusion est supérieure ou égale au seuil, pour autoriser soit la poursuite de la diffusion des signaux audio de la source audio auxiliaire lorsque de nouveaux signaux audio ont été générés par la source audio auxiliaire entre la fin de la diffusion de précédents signaux audio et l'expiration d'une seconde temporisation débutée juste après cette fin, soit la reprise de la diffusion de signaux audio de la source audio primaire sélectionnée lorsqu'aucun nouveau signal audio n'a été généré par la source audio auxiliaire entre la fin de la diffusion des précédents signaux audio et l'expiration de cette seconde temporisation débutée juste après cette fin ;
   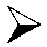 la première temporisation peut être comprise entre environ 0 seconde et environ 5 secondes, et la seconde temporisation peut être comprise entre environ 2 secondes et environ 10 secondes ;
   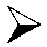 ses moyens de contrôle peuvent être agencés pour fixer la durée de la première temporisation et/ou la durée de la seconde temporisation en fonction de la durée de diffusion des signaux audio par la source audio auxiliaire ;
   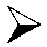 la seconde temporisation peut être plus longue que la première temporisation ;
- ses moyens de contrôle peuvent être agencés pour procéder à l'analyse lorsque les signaux audio diffusés par la source audio primaire sélectionnée sont du premier type ;
- le seuil peut être compris entre environ 5 secondes et environ 60 secondes ;
- ses moyens de contrôle peuvent être agencés pour fixer la valeur du seuil en fonction d'au moins une information auxiliaire fournie par la source audio auxiliaire juste avant la génération de premiers signaux audio ou avec ces premiers signaux audio générés.

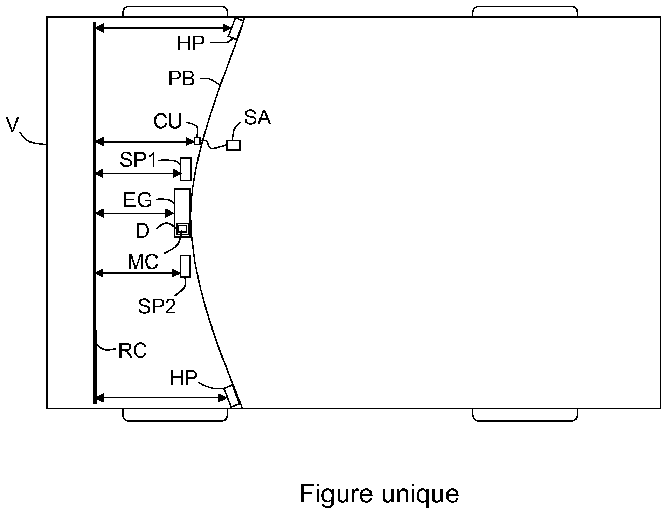

D'autres caractéristiques et avantages de l'invention apparaîtront à l'examen de la description détaillée ci-après, et du dessin annexé, sur lequel l'unique figure illustre schématiquement et fonctionnellement, dans une vue du dessus, un véhicule automobile équipé de deux sources audio primaires, d'une source audio auxiliaire et d'un équipement de gestion comprenant un dispositif de contrôle selon l'invention.

L'invention a notamment pour but de proposer un dispositif de contrôle D destiné à contrôler la diffusion de signaux audio dans un système V comprenant au moins une source audio primaire SPi et au moins une source audio auxiliaire SA.

Dans ce qui suit, on considère, à titre d'exemple non limitatif, que le système V est un véhicule automobile, comme par exemple une voiture. Mais l'invention n'est pas limitée à ce type de système. Elle concerne en effet tout type de système disposant d'au moins une source audio primaire SPi, d'au moins une source audio auxiliaire SA et de haut-parleurs HP propres à diffuser les signaux audio générés par ces sources audio primaire(s) SPi et auxiliaire(s) SA. Par conséquent, elle concerne notamment les véhicules (terrestres, maritimes (ou fluviaux), et aériens), les bâtiments, les installations, éventuellement industrielles, les ordinateurs (éventuellement portables), les systèmes de navigation transportable, les chaînes haute fidélité, et les téléviseurs.

On a schématiquement représenté sur l'unique figure un véhicule automobile V équipé de deux sources audio primaires SPi (i = 1 ou 2) de façon intégrée et permanente, d'une source audio auxiliaire SA rapportée temporairement, d'un équipement de gestion EG intégré et comprenant un dispositif de contrôle D selon l'invention, et de haut-parleurs HP.

Comme illustré non limitativement, les sources audio primaire(s) SPi et l'équipement de gestion EG peuvent être connectés à un réseau de communication, éventuellement multiplexé, que comprend le système V (ici un véhicule), afin de pouvoir échanger des données. Dans ce cas, les signaux audio, qui sont générés par une source audio primaire SPi, sont transmis par cette dernière (SPi) à l'équipement de gestion EG via le réseau de communication RC, qui se charge ensuite de les transférer vers les haut-parleurs HP, par exemple via le réseau de communication RC (comme illustré) ou bien directement via un lien audio filaire ou sans fil. Par ailleurs, le système V (ici un véhicule) peut comprendre au moins un connecteur CU (éventuellement de type USB ou jack) connecté au réseau de communication RC et auquel peut se connecter une source audio auxiliaire SA via un câble électrique adapté. Dans ce cas, les signaux audio, qui sont générés par la source audio auxiliaire SA, sont transmis par cette dernière (SA) à l'équipement de gestion EG via le câble électrique adapté, le connecteur CU et le réseau de communication RC. En variante ou en complément, le système V (ici un véhicule) peut comprendre des moyens de communication (éventuellement connectés au réseau de communication RC) et avec lesquels une source audio auxiliaire SA peut communiquer par voie d'ondes (par exemple selon le protocole Bluetooth ou WiFi). Dans ce cas, les signaux audio, qui sont générés par la source audio auxiliaire SA, sont transmis par cette dernière (SA) à l'équipement de gestion EG via les moyens de communication (lesquels font éventuellement partie de cet équipement de gestion EG). On notera également que les signaux audio peuvent être éventuellement encapsulés.

L'équipement de gestion EG est par exemple implanté dans la planche de bord PB du véhicule V. Il est par exemple couplé à un écran d'affichage sensitif du véhicule V qui permet, notamment, d'afficher des icônes et des menus destinés à permettre à un usager de sélectionner et contrôler une source audio. En variante, l'équipement de gestion EG peut faire partie d'une source audio primaire SPi comprenant éventuellement son propre écran d'affichage et son interface homme/machine, comme c'est parfois le cas de certains autoradios appelés « head unit » en anglais.

On notera que le système V (ici un véhicule) pourra comporter plus de deux sources audio primaires SPi ou bien seulement une seule, et qu'il pourra comporter temporairement plus d'une source audio auxiliaire SA.

A titre d'exemple non limitatif, une première source audio primaire SP1 est une radio, une seconde source audio primaire SP2 est un dispositif d'aide à la navigation, et la source audio auxiliaire SA est un téléphone intelligent (ou smartphone) comportant plusieurs applications pouvant générer des signaux audio à diffuser.

D'une manière générale, une source audio primaire est une source intégrée fixement et de façon permanente dans le système V et propre à générer des signaux audio, analogiques ou numériques, et présentant un premier type connu et/ou un second type connu qui assure une priorité de diffusion. Il pourra donc s'agir, par exemple, d'une radio, d'un lecteur de disques compacts et/ou vidéo intégré, d'un lecteur de cassettes audio intégré, d'un périphérique hébergeant des médias et couplé à un connecteur USB intégré, d'un dispositif d'aide à la navigation intégré, d'un dispositif d'aide au stationnement intégré, d'un dispositif de communication sans fil intégré, d'une radio web, de sons générés par des fonctions du système V, d'alertes du système V, ou de fichiers média internes au système V.

Egalement d'une manière générale, une source audio auxiliaire est une source audio externe qui provient d'un appareil additionnel qui est transportable et donc qui peut être présente de façon temporaire dans le système V, dont la connexion est filaire ou non, et qui est propre à générer des signaux audio, analogiques ou numériques, dont le type n'est pas connu du système V ou peut varier dans le temps. Il pourra donc s'agir, par exemple, d'un lecteur de disques compacts et/ou vidéo transportable, d'un dispositif d'aide à la navigation transportable, d'un équipement de communication mobile (téléphone (éventuellement intelligent), objet connecté, ou tablette électronique), ou d'un lecteur de média transportable.

Par ailleurs, on entend ici par « signaux audio d'un premier type » des signaux audio média ou musicaux dont la durée est relativement longue et qui sont diffusés de façon sensiblement continue, et par « signaux audio d'un second type » des signaux audio qui sont diffusés de temps en temps et dont la durée est généralement relativement courte (comme par exemple une annonce de trafic, un message de guidage routier, la lecture d'un SMS, un appel téléphonique, ou un signal sonore d'aide au stationnement).

Dans l'exemple non limitatif illustré sur l'unique figure, le dispositif de contrôle D fait partie de l'équipement de gestion EG. Cela est avantageux mais pas obligatoire. Ce dispositif de contrôle D pourrait en effet être un équipement qui est couplé à l'équipement de gestion EG, directement ou indirectement. Par conséquent, le dispositif de contrôle D peut être réalisé sous la forme de modules logiciels (ou informatiques ou encore « software »), ou bien d'une combinaison de circuits électroniques (ou « hardware ») et de modules logiciels.

Un dispositif de contrôle D, selon l'invention, comprend des moyens de contrôle MC qui sont agencés, lorsqu'une source audio primaire SPi sélectionnée par un usager diffuse des signaux audio via les haut-parleurs HP et qu'une source audio auxiliaire SA veut diffuser des signaux audio, pour autoriser cette dernière diffusion, et pour analyser une durée de diffusion de ces derniers signaux audio afin de décider d'autoriser soit la poursuite de la diffusion des signaux audio de la source audio auxiliaire SA, soit la reprise de la diffusion de signaux audio de la source audio primaire SPi sélectionnée, en fonction du résultat d'une comparaison de cette durée de diffusion à un seuil.

Ce seuil peut, par exemple, être compris entre environ 5 secondes et environ 60 secondes.

On notera que ce seuil peut être soit prédéfini et donc invariable (par exemple égal à 15 secondes), soit variable. Dans cette dernière alternative, les moyens de contrôle MC sont agencés pour fixer la valeur du seuil en fonction d'au moins une information auxiliaire qui est fournie par la source audio auxiliaire SA juste avant qu'elle ne génère des premiers signaux audio ou avec ces premiers signaux audio générés. Il peut s'agir d'un calcul basé sur le fait que cette source audio auxiliaire SA a émis précédemment de l'audio d'un certain type. Cette variabilité permet d'ajuster ce seuil afin de détecter au mieux le type de source auxiliaire en se basant sur la probabilité qu'une source auxiliaire ayant déjà émis de l'audio d'un certain type le refera de nouveau.

De préférence, les moyens de contrôle MC sont agencés pour procéder à l'analyse de la durée des signaux audio diffusés par la source audio primaire SPi sélectionnée lorsque ces signaux audio diffusés sont du premier type. On comprendra en effet que lorsque ces signaux audio sont du second type, ils bénéficient d'une diffusion prioritaire et donc seront diffusés quoi qu'il arrive, notamment temporairement à la place de signaux audio en cours de diffusion par la source audio auxiliaire SA.

Au moins deux modes de réalisation peuvent être envisagés pour les moyens de contrôle MC.

Dans un premier mode de réalisation, basique, les moyens de contrôle MC peuvent être agencés pour autoriser soit la poursuite de la diffusion des signaux audio de la source audio auxiliaire SA lorsque la durée de diffusion est supérieure au seuil, soit la reprise de la diffusion de signaux audio de la source audio primaire SPi sélectionnée lorsque la durée de diffusion est inférieure au seuil.

Ce premier mode de réalisation autorise donc la source audio auxiliaire SA à diffuser ses signaux audio indépendamment de leur type, dès lors que leur durée est supérieure au seuil. On considère en effet ici que si la durée des signaux audio est supérieure au seuil, c'est qu'ils sont du premier type et donc qu'il faut continuer à autoriser la source audio auxiliaire SA à diffuser ses signaux audio. Cela permet d'améliorer notablement la situation résultant de la gestion proposée dans l'état de l'art. Cependant, il demeure quelques situations ambiguës aboutissant à des choix de diffusion non optimaux par les moyens de contrôle MC. Ces ambiguïtés peuvent être levées grâce au second mode de réalisation plus sophistiqué qui est décrit ci-dessous.

Dans ce second mode de réalisation, les moyens de contrôle MC sont agencés pour agir en fonction de deux cas qui sont chacun subdivisés en deux sous-cas.

Un premier cas correspond à une durée de diffusion inférieure au seuil. Dans ce cas, les moyens de contrôle MC sont agencés pour autoriser soit la poursuite de la diffusion des signaux audio de la source audio auxiliaire SA lorsque de nouveaux signaux audio ont été générés par cette source audio auxiliaire SA entre la fin de la diffusion des précédents signaux audio et l'expiration d'une première temporisation débutée juste après cette fin (premier sous-cas), soit la reprise de la diffusion de signaux audio de la source audio primaire SPi sélectionnée lorsqu'aucun nouveau signal audio n'a été généré par la source audio auxiliaire SA entre la fin de la diffusion des précédents signaux audio et l'expiration de la première temporisation débutée juste après cette fin (second sous-cas).

Le premier sous-cas de ce premier cas permet d'éviter de repasser sur la source audio primaire SPi sélectionnée alors que la source audio auxiliaire SA a généré de nouveaux signaux audio très peu de temps après les précédents (de durée inférieure au seuil), ce qui pourrait s'avérer gênant pour les passagers du véhicule V. La première temporisation peut, par exemple, ne pas être remise à zéro lorsque de nouveaux signaux audio ont été générés.

Le second sous-cas de ce premier cas permet de repasser sur la source audio primaire SPi sélectionnée lorsque la source audio auxiliaire SA n'a pas généré de nouveaux signaux audio suffisamment rapidement après les précédents (de durée inférieure au seuil), ce qui permet d'éviter des blancs de diffusion trop longs. La première temporisation peut, par exemple, être remise à zéro quand de nouveaux signaux audio n'ont pas été générés.

Un second cas correspond à une durée de diffusion supérieure ou égale au seuil. Dans ce cas, les moyens de contrôle MC sont agencés pour autoriser soit la poursuite de la diffusion des signaux audio de la source audio auxiliaire SA lorsque de nouveaux signaux audio ont été générés par cette source audio auxiliaire SA entre la fin de la diffusion de précédents signaux audio et l'expiration d'une seconde temporisation débutée juste après cette fin (premier sous-cas), soit la reprise de la diffusion de signaux audio de la source audio primaire SPi sélectionnée lorsqu'aucun nouveau signal audio n'a été généré par la source audio auxiliaire SA entre la fin de la diffusion des précédents signaux audio et l'expiration de la seconde temporisation débutée juste après cette fin (second sous-cas).

Le premier sous-cas de ce second cas permet d'éviter de repasser sur la source audio primaire SPi sélectionnée lorsque la source audio auxiliaire SA a généré de nouveaux signaux audio peu de temps après les précédents (de durée un peu supérieure au seuil), ce qui pourrait s'avérer gênant pour les passagers du véhicule V. La seconde temporisation peut, par exemple, ne pas être remise à zéro lorsque de nouveaux signaux audio ont été générés suffisamment rapidement.

Le second sous-cas de ce second cas permet de repasser sur la source audio primaire SPi sélectionnée lorsque la source audio auxiliaire SA n'a pas généré de nouveaux signaux audio suffisamment rapidement après les précédents (de durée supérieure au seuil), ce qui permet d'éviter des blancs de diffusion trop longs. La seconde temporisation est, de préférence, remise à zéro quand de nouveaux signaux audio n'ont pas été générés suffisamment rapidement.

La première temporisation peut, par exemple, être comprise entre environ 0 seconde et environ 5 secondes. Par ailleurs, la seconde temporisation peut, par exemple, être comprise entre environ 2 secondes et environ 10 secondes

On notera que la durée de la première temporisation et/ou la durée de la seconde temporisation peu(ven)t être soit prédéfinie(s) et donc invariable(s) (par exemple égales à 2 secondes et 5 secondes respectivement), soit variable(s). Dans cette dernière alternative, les moyens de contrôle MC peuvent être agencés pour fixer la durée de la première temporisation et/ou la durée de la seconde temporisation en fonction de la durée de diffusion des signaux audio par la source audio auxiliaire SA. Cette variation peut être résultante d'une information reçue de la part de la source auxiliaire SA. Elle peut aussi être la résultante d'un algorithme permettant d'identifier que la source audio diffuse de la musique et donc le type de source. Par exemple, si on reçoit une information signalant que le type d'audio est « média » pendant une diffusion, on peut augmenter la temporisation de fin pour laisser suffisamment de temps pour la diffusion de la piste suivante ou pour attendre une action de l'utilisateur. Cette variabilité permet d'ajuster la temporisation afin d'avoir un traitement le plus optimal possible et dépendant du contexte.

On notera également que la seconde temporisation peut être soit égale à la première temporisation, soit plus longue que la première temporisation.

## Revendications

1. Dispositif (D) de contrôle de la diffusion de signaux audio couplé à un équipement de gestion (EG) de sources audio (SPi, SAj) pour un système (V) comprenant au moins une source audio primaire (SPi), générant des signaux audio d'un premier type connu du système ou d'un second type connu du système, et au moins une source audio auxiliaire (SA), générant des signaux audio d'un type inconnu du système,
**caractérisé en ce que** le dispositif (D) de contrôle comprend des moyens de contrôle (MC) agencés, lorsqu'une source audio primaire (SPi) sélectionnée diffuse des signaux audio et qu'une source audio auxiliaire (SA) veut diffuser des signaux audio, pour autoriser cette dernière diffusion, et pour analyser une durée de diffusion de ces derniers signaux audio afin de décider d'autoriser soit la poursuite de la diffusion des signaux audio de ladite source audio auxiliaire (SA), soit la reprise de la diffusion de signaux audio de ladite source audio primaire (SPi) sélectionnée, en fonction du résultat d'une comparaison de ladite durée de diffusion à un seuil, ledit dispositif étant **caractérisé en ce que** lesdits moyens de contrôle (MC) sont agencés, i) lorsque ladite durée de diffusion est inférieure audit seuil, pour autoriser soit la poursuite de la diffusion des signaux audio de ladite source audio auxiliaire (SA) lorsque de nouveaux signaux audio ont été générés par ladite source audio auxiliaire (SA) entre la fin de la diffusion des précédents signaux audio et l'expiration d'une première temporisation débutée juste après ladite fin, soit la reprise de la diffusion de signaux audio de ladite source audio primaire (SPi) sélectionnée lorsqu'aucun nouveau signal audio n'a été généré par ladite source audio auxiliaire (SA) entre la fin de la diffusion des précédents signaux audio et l'expiration de ladite première temporisation débutée juste après ladite fin, et ii) lorsque ladite durée de diffusion est supérieure ou égale audit seuil, pour autoriser soit la poursuite de la diffusion des signaux audio de ladite source audio auxiliaire (SA) lorsque de nouveaux signaux audio ont été générés par ladite source audio auxiliaire (SA) entre la fin de la diffusion de précédents signaux audio et l'expiration d'une seconde temporisation débutée juste après ladite fin, soit la reprise de la diffusion de signaux audio de ladite source audio primaire (SPi) sélectionnée lorsqu'aucun nouveau signal audio n'a été généré par ladite source audio auxiliaire (SA) entre la fin de la diffusion des précédents signaux audio et l'expiration de ladite seconde temporisation débutée juste après ladite fin.

2. Dispositif selon la revendication 1, **caractérisé en ce que** lesdits moyens de contrôle (MC) sont agencés pour fixer la durée de ladite première temporisation et/ou la durée de ladite seconde temporisation en fonction de la durée de diffusion des signaux audio par ladite source audio auxiliaire (SA).

3. Dispositif selon l'une des revendications 1 ou 2, **caractérisé en ce que** ladite seconde temporisation est plus longue que ladite première temporisation.

4. Dispositif selon l'une des revendications 1 à 3, **caractérisé en ce que** lesdits moyens de contrôle (MC) sont agencés pour procéder à ladite analyse lorsque les signaux audio diffusés par ladite source audio primaire (SPi) sélectionnée sont du premier type.

5. Dispositif selon l'une des revendications 1 à 4, **caractérisé en ce que** lesdits moyens de contrôle (MC) sont agencés pour fixer la valeur dudit seuil en fonction d'au moins une information auxiliaire fournie par ladite source audio auxiliaire (SA) juste avant la génération de premiers signaux audio ou avec ces premiers signaux audio générés.

## Patentansprüche

1. Vorrichtung (D) zur Steuerung der Verbreitung von Audiosignalen, die mit einer Ausstattung (EG) zur Verwaltung von Audioquellen (SPi, SAj) für ein System (V) versehen ist, das mindestens eine primäre Audioquelle (SPi) umfasst, die Audiosignale eines dem System bekannten ersten Typs oder eines dem System bekannten zweiten Typs erzeugt, und mindestens eine Hilfsaudioquelle (SA), die Audiosignale eines dem System unbekannten Typs erzeugt,
**dadurch gekennzeichnet, dass** die Vorrichtung (D) zur Steuerung Steuermittel (MC) umfasst, die eingerichtet sind, um, wenn eine ausgewählte primäre Audioquelle (SPi) Audiosignale verbreitet und eine Hilfsaudioquelle (SA) Audiosignale verbreiten will, zum Gestatten dieser letzteren Verbreitung und zum Analysieren einer Verbreitungsdauer dieser letzteren Audiosignale, um zu entscheiden, entweder die Fortsetzung der Verbreitung der Audiosignale der Hilfsaudioquelle (SA) oder die Wiederaufnahme der Verbreitung von Audiosignalen der ausgewählten primären Audioquelle (SPi) zu gestatten, in Abhängigkeit von dem Resultat eines Vergleichs der Verbreitungsdauer mit einem Schwellenwert, die Vorrichtung **dadurch gekennzeichnet ist, dass** die Steuermittel (MC) eingerichtet sind, um, i) wenn die Verbreitungsdauer kleiner ist als der Schwellenwert, entweder die Fortsetzung der Verbreitung der Audiosignale der Hilfsaudioquelle (SA) zu gestatten, wenn neue Audiosignale von der Hilfsaudioquelle (SA) zwischen dem Ende der Verbreitung der vorhergehenden Audiosignale und dem Ablaufen einer ersten Verzögerung, die unmittelbar nach dem Ende begonnen hat, erzeugt wurden, oder die Wiederaufnahme der Verbreitung von Audiosignalen der ausgewählten primären Audioquelle (SPi), wenn kein neues Audiosignal von der Hilfsaudioquelle (SA) zwischen dem Ende der Verbreitung der vorhergehenden Audiosignale und dem Ablaufen der ersten Verzögerung, die unmittelbar nach dem Ende begonnen hat, erzeugt wurden, zu gestatten, und ii) wenn die Dauer der Verbreitung größer oder gleich dem Schwellenwert ist, die Fortsetzung der Verbreitung der Audiosignale der Hilfsaudioquelle (SA) zu gestatten, wenn neue Audiosignale von der Hilfsaudioquelle (SA) zwischen dem Ende der Verbreitung vorhergehender Audiosignale und dem Ablaufen einer zweiten Verzögerung, die unmittelbar nach dem Ende begonnen wurde, erzeugt wurden, oder die Wiederaufnahme der Verbreitung von Audiosignalen der ausgewählten primären Audioquelle (SPi), wenn kein neues Audiosignal von der Hilfsaudioquelle (SA) zwischen dem Ende der Verbreitung der vorhergehenden Audiosignale und dem Ablaufen der zweiten Verzögerung, die unmittelbar nach dem Ende begonnen hat, erzeugt wurde.

2. Vorrichtung nach Anspruch 1, **dadurch gekennzeichnet, dass** die Steuermittel (MC) eingerichtet sind, um die Dauer der ersten Verzögerung und/oder die Dauer der zweiten Verzögerung als Funktion der Verbreitungsdauer der Audiosignale durch die Hilfsaudioquelle (SA) festzulegen.

3. Vorrichtung nach einem der Ansprüche 1 oder 2, **dadurch gekennzeichnet, dass** die zweite Verzögerung länger ist als die erste Verzögerung.

4. Vorrichtung nach einem der Ansprüche 1 bis 3, **dadurch gekennzeichnet, dass** die Steuermittel (MC) eingerichtet sind, um die Analyse vorzunehmen, wenn die von der ausgewählten primären Audioquelle (SPi) verbreiteten Audiosignale des ersten Typs sind.

5. Vorrichtung nach einem der Ansprüche 1 bis 4, **dadurch gekennzeichnet, dass** die Steuermittel (MC) eingerichtet sind, um den Wert der Schwelle in Abhängigkeit von mindestens einer Hilfsinformation, die von der Hilfsaudioquelle (SA) unmittelbar vor dem Erzeugen erster Audiosignale oder mit diesen ersten erzeugten Audiosignalen, geliefert werden, festzulegen.

## Claims

1. A device (D) for controlling the broadcast of audio signals coupled to a management equipment (EG) of audio sources (SPi, SAj) for a system (V) including at least one primary audio source (SPi), generating audio signals of a first type known by the system or of a second type known by the system, and at least one auxiliary audio source (SA), generating audio signals of a type unknown by the system,
**characterized in that** the control device (D) includes control means (MC) arranged, when a selected primary audio source (SPi) broadcasts audio signals and an auxiliary audio source (SA) wishes to broadcast audio signals, to permit this latter broadcast, and to analyse a broadcast duration of these latter audio signals so as to decide to permit either the continuation of the broadcast of the audio signals of said auxiliary audio source (SA), or the resumption of the broadcast of audio signals of said selected primary audio source (SPi), as a function of the result of a comparison of said broadcast duration with a threshold, said device being **characterized in that** said control means (MC) are arranged, i) when said broadcast duration is less than said threshold, to permit either the continuation of the broadcast of the audio signals of said auxiliary audio source (SA) when new audio signals have been generated by said auxiliary audio source (SA) between the end of the broadcast of the preceding audio signals and the expiry of a first delay time started just after said end, or the resumption of the broadcast of audio signals of said selected primary audio source (SPi) when no new audio signals has been generated by said auxiliary audio source (SA) between the end of the broadcast of the preceding audio signals and the expiry of said first time delay started just after said end, and ii) when said broadcast duration is greater than or equal to said threshold, to permit either the continuation of the broadcast of the audio signals of said auxiliary audio source (SA) when new audio signals have been generated by said auxiliary audio source (SA) between the end of the broadcast of preceding audio signals and the expiry of a second time delay started just after said end, or the resumption of the broadcast of audio signals of said selected primary audio source (SPi) when no new audio signal has been generated by said auxiliary audio source (SA) between the end of the broadcast of the preceding audio signals and the expiry of said second time delay started just after said end.

2. The device according to Claim 1, **characterized in that** said control means (MC) are arranged to fix the duration of said first time delay and/or the duration of said second time delay as a function of the broadcast duration of the audio signals by said auxiliary audio source (SA).

3. The device according to one of Claims 1 or 2, **characterized in that** said second time delay is longer than said first time delay.

4. The device according to one of Claims 1 to 3, **characterized in that** said control means (MC) are arranged to proceed to said analysis when the audio signals broadcast by said selected primary audio source (SPi) are of the first type.

5. The device according to one of Claims 1 to 4, **characterized in that** said control means (MC) are arranged to fix the value of said threshold as a function of at least one item of auxiliary information provided by said auxiliary audio source (SA) just before the generation of first audio signals or with these first generated audio signals.
